# EUROPEAN PATENT APPLICATION

(11) **EP 3 628 595 A1**
(43) Date of publication of application: **01.04.2020**
(21) Application number: 19193821.6
(22) Date of filing: 27.08.2019
(51) Int. Cl.: B64D 29/00, B64D 33/02

(54) **NACELLE INTAKE**

(30) Priority: 27.09.2018 GB 201815759
(71) Applicant: Rolls-Royce plc, London N1 9FX (GB)
(72) Inventor: Qin, Ning, Derby, Derbyshire DE24 8BJ (GB); Shahpar, Shahrokh, Derby, Derbyshire DE24 8BJ (GB); Smith, Angus, Derby, Derbyshire DE24 8BJ (GB); John, Alistair, Derby, Derbyshire DE24 8BJ (GB)
(74) Representative: Rolls-Royce plc

(57) **Abstract**

A nacelle (21) defining an intake (12) is provided for channelling and conditioning freestream airflow to a fan (23) of a ducted fan gas turbine engine (10). The nacelle intake comprises in flow series an intake lip (40), and a diffuser (42). The intake lip has at its forwardmost end a highlight (H) which is a closed loop defining a boundary between inner and outer surfaces of the nacelle, and the diffuser terminates at its rearwardmost end at a front face of the fan (23). The intake has a circumferentially extending shock control bump (48) or a series of circumferentially spaced shock control bumps (48) formed thereon. On longitudinal cross sections through the intake containing the bump (48) or series of bumps (48): the bump or each bump of the series of bumps has a profile which forms in flow series an up-ramp (46), a maximum (M) and a down-ramp (44), at least one of the up-ramp and the down-ramp forming an inflection point or curvature discontinuity point on the profile, and the inflection point or curvature discontinuity point being axially located between the highlight and a position which is axially rearward therefrom by a distance of no more than 0.6 L, where L is the axial distance between the highlight and the front fan face.

## Description

The present disclosure relates to a nacelle intake of a ducted fan gas turbine engine.

A nacelle of a ducted fan turbine engine provides an intake comprising in flow series an intake lip, and a diffuser. The role of the intake is to control and diffuse the incoming flow before it reaches the fan. The engine nacelle geometry which defines the intake must be carefully designed to decelerate and diffuse the flow with a low total pressure loss. Any inefficiencies in the intake result in successively magnified losses through other engine components. Thus a 1% increase in intake pressure loss can result in equivalent or greater loss in overall engine thrust. In particular, if the flow on the intake lip separates at high angles of incidence, the effect on the fan can be dramatic. A separated flow causes a blockage to the fan, and not only decreases engine performance, but if sufficiently large can cause the whole engine to stall.

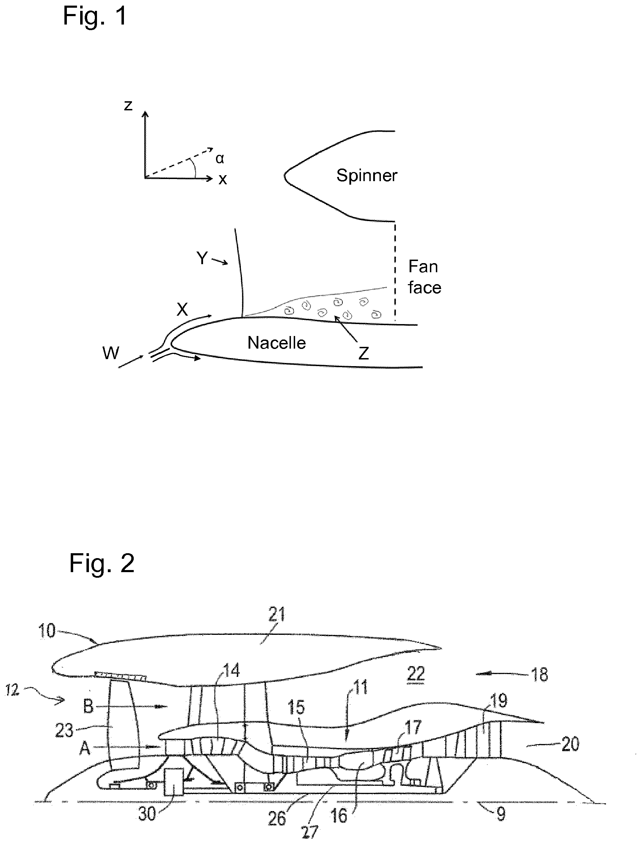

As shown schematically in Figure 1, when the freestream W flow enters the engine intake at large angles of attack α, the acceleration X of the flow around the intake lip causes a normal shock Y to form. This shock on the lower part of the lip causes the boundary layer Z to thicken, and if the angle of attack is high enough, large separation can occur.

Thus engine intakes must be designed to avoid separation across a wide range of operating conditions, including extreme angles of attack or in high cross-winds. Due to the increasingly high bypass ratio of engines, the diameter of engine intakes is increasing, and therefore to compensate for this and reduce weight and drag, it is desirable that engine intakes become shorter. See for example, Peters, A., Spakovszky, Z. S., Lord, W. K., and Rose, B. (2015), Ultrashort nacelles for low fan pressure ratio propulsors, Journal of Turbomachinery, 137(2):021001, and Christie, R., Heidebrecht, A., and MacManus, D. (2017), An automated approach to nacelle parameterization using intuitive class shape transformation curves, Journal of Engineering for Gas Turbines and Power, 139(6):062601. However, such shorter intakes are more aggressive and have steeper diffuser angles, which exacerbate the problem of shock-induced separation at off-design conditions. Separately, it is desirable that nacelles become more slender (i.e. the distance between the inner and outer surfaces of the nacelle is reduced for drag reduction, but this can also exacerbate cross-flow separation, and shockwave/boundary layer interaction.

In general terms, the present disclosure uses shock control bumps to mitigate the effect of engine intake shocks, leading to reduced shock-induced separation and increased safe operating ranges for engine intakes.

According to a first aspect, there is provided a nacelle defining an intake for channelling and conditioning freestream airflow to a fan of a ducted fan gas turbine engine, the intake comprising in flow series an intake lip, and a diffuser, the intake lip having at its forwardmost end a highlight which is a closed loop defining a boundary between inner and outer surfaces of the nacelle, and the diffuser terminating at its rearwardmost end at a front face of the fan;
wherein the intake has a circumferentially extending shock control bump or a series of circumferentially spaced shock control bumps formed thereon; and
wherein, on longitudinal cross sections through the intake containing the bump or series of bumps: the bump or each bump of the series of bumps has a profile which forms in flow series an up-ramp, a maximum and a down-ramp, at least one of the up-ramp and the down-ramp forming an inflection point or curvature discontinuity point on the profile, and the inflection point or curvature discontinuity point being axially located between the highlight and a position which is axially rearward therefrom by a distance of no more than 0.6 L, where L is the axial distance between the highlight and the front fan face.

Advantageously, the bump or series of bumps can produce compression waves or a lambda shock in place of the aforementioned normal shock, thereby reducing shock-induced separation and extending the safe operating range of the engine.

According to a second aspect, there is provided gas turbine engine for an aircraft comprising:
an engine core comprising a turbine, a compressor, and a core shaft connecting the turbine to the compressor;
a fan located upstream of the engine core, the fan comprising a plurality of fan blades; and
the nacelle defining an intake according to the first aspect for channelling and conditioning freestream airflow to the fan.

Optional features of the present disclosure will now be set out. These are applicable singly or in any combination with any aspect of the present disclosure.

The inflection or curvature discontinuity point may be axially located between the highlight and a position which is axially rearward therefrom by a distance of no more than 0.5 L or 0.4 L. In general, the further forward the inflection or curvature discontinuity point is located, the earlier the compression waves or a lambda shock can be produced.

The bump or series of bumps may be configured such that radial inwards displacement of the intake by the bump or series of bumps varies, in the circumferential direction, from a maximum at about the center of the bump or series of bumps to a minimum (e.g. zero) at the ends of the bump or series of bumps. This variation displacement typically matches the corresponding variation in airflow acceleration due to local incidence angle.

Typically, the bump or series of bumps may be centred, in the circumferential direction, on the bottom dead centre position of the intake. This is particularly helpful for reducing shock-induced separation during aircraft climbing manoeuvres. On a closed loop around the intake coinciding with the bump or series of bumps, a first portion of the loop may be without the bump or series of bumps, and a remaining second portion of the loop may contain the bump or series of bumps. Conveniently, the first portion may be one half of the circumferential extent of the closed loop, and the second portion may be the other half of the circumferential extent of the closed loop.

The or each bump may be smoothly curved and may be tangential to (indeed, may maintain curvature continuity with) the surrounding parts of the intake, e.g. for forming compression waves in the airflow entering the intake over the bump(s). The compression waves may be terminated by a greatly weakened shock. Alternatively, the or each bump may be facetted, e.g. for forming a lambda shock in the airflow entering the intake over the bump(s). The or each facetted bump may employ a straight-lined up-ramp and down-ramp (e.g. with a flat therebetween), or may employ a smoothly curved up-ramp and down-ramp, or may employ a mixture of the two (e.g. straight-lined on one ramp and smoothly curved on the other). In general, however, the or each facetted bump is non-tangential to the surrounding parts of the intake on at least the upstream or downstream side, and typically on both sides.

When the series of circumferentially spaced shock control bumps is formed on the intake, the bumps may be configured such that, between the bumps, the intake displaces radially outwards to compensate for fan frontal area blocked by the bumps.

As noted elsewhere herein, the present disclosure may relate to a gas turbine engine. Such a gas turbine engine comprises an engine core comprising a turbine, a combustor, a compressor, and a core shaft connecting the turbine to the compressor. Such a gas turbine engine comprises a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
Figure 1 shows schematically a bottom half of a longitudinal cross section of an intake of a ducted fan gas turbine engine at high angle of attack;
Figure 2 is a sectional side view of a gas turbine engine;
Figure 3 is a close up sectional side view of an upstream portion of a gas turbine engine;
Figure 4 is a partially cut-away view of a gearbox for a gas turbine engine;
Figure 5 shows schematically a longitudinal cross section through the nacelle air intake of the engine shown in Figure 2;
Figure 6 shows schematically a front view of the intake of Figure 5;
Figure 7 shows schematically a bottom half of the longitudinal cross section of Figure 5 at high angle of attack;
Figure 8 shows plots of variation in pressure loss at the fan face against incidence angle for a conventional nacelle and a nacelle with a shock bump;
Figure 9 shows schematically a front view of a variant intake;
Figure 10 shows schematically a front view of another variant intake;
Figure 11 shows schematically a front view of another variant intake;
Figure 12 shows schematically a front view of another variant intake;
Figure 13 shows schematically a bottom half of a longitudinal cross section of the intake of Figure 12 at high angle of attack;
Figure 14 shows schematically a bottom half of a longitudinal cross section of another variant intake; and
Figure 15 shows schematically a front view of another variant intake.

Figure 2 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

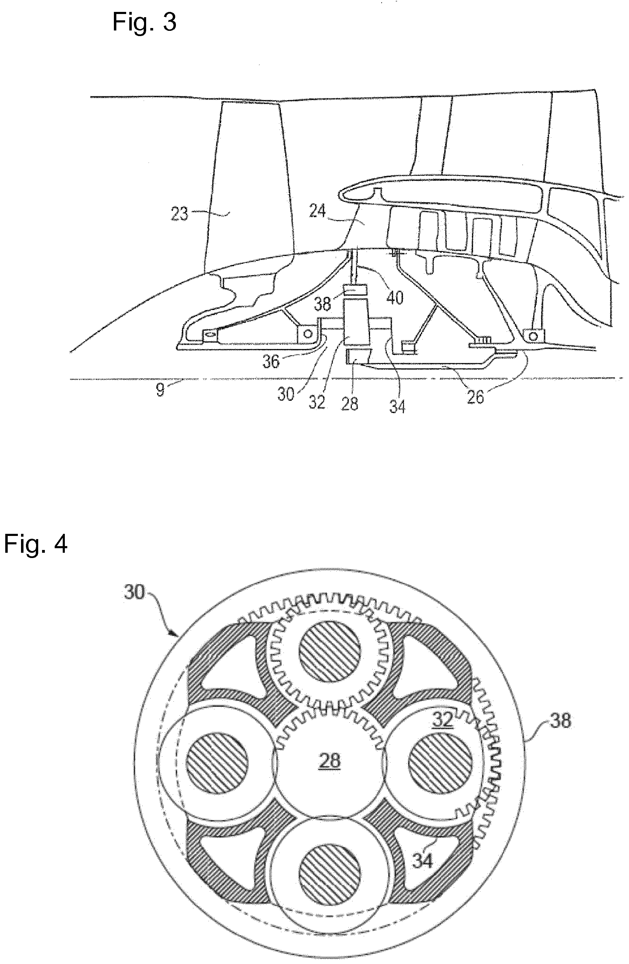

An exemplary arrangement for a geared fan gas turbine engine 10 is shown in Figure 3. The low pressure turbine 19 (see Figure 2) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 4. Each of the sun gear 28, planet gears 32 and ring gear 38 comprise teeth about their periphery to intermesh with the other gears. However, for clarity only exemplary portions of the teeth are illustrated in Figure 4. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 3 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 3. For example, where the gearbox 30 has a star arrangement (described above), the skilled person would readily understand that the arrangement of output and support linkages and bearing locations would typically be different to that shown by way of example in Figure 3.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 2 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 2), and a circumferential direction (perpendicular to the page in the Figure 2 view). The axial, radial and circumferential directions are mutually perpendicular.

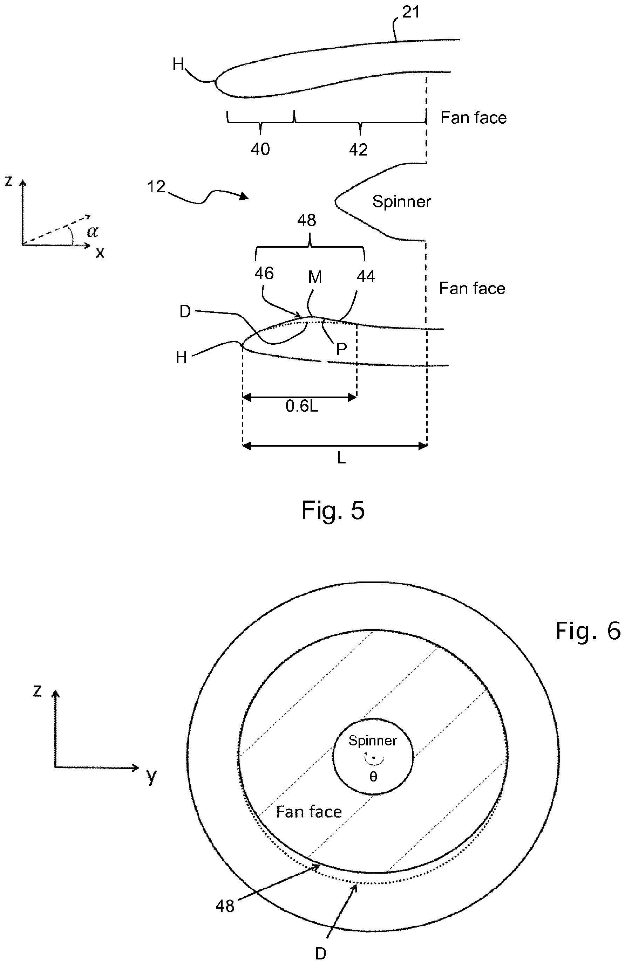

A longitudinal cross section through the nacelle air intake 12 of the engine 10 of Figure 2 is shown schematically in Figure 5, and a front view of the intake is shown schematically in Figure 6. The lightly scarfed intake comprises in flow series an intake lip 40, and a diffuser 42. The forwardmost end of the lip is a highlight H, which is a closed loop defining a boundary between inner and outer surfaces of the nacelle 21. The diffuser terminates at its rearwardmost end at a front face of the fan. The intake uses a circumferentially extending shock control bump 48 to weaken shock waves at high incidence angles α, therefore reducing shock-induced separation and extending the safe operating range of the engine.

Shock control bumps can weaken shock waves on aerodynamic surfaces to reduce entropy generation and therefore drag. See Qin, N., W. S. Wong, and A. Le Moigne, Three-dimensional contour bumps for transonic wing drag reduction, Proceedings of the Institution of Mechanical Engineers, Part G: Journal of Aerospace Engineering 222.5 (2008): 619-629, and Bruce, P. and Colliss, S. (2015), Review of research into shock control bumps, Shock Waves, 25(5):451-471.

In Figures 5 and 6, the shock control bump 48 is added to the lower half of the intake 12. The bump displaces the intake radially inwards relative to a datum geometry D (indicated by dotted line) where it would otherwise be.

The bump 48 is smoothly curved and is preferably tangential to the upstream and downstream parts of the intake 12. Nonetheless, it forms a pre-compression "ramp/bump" that decelerates the flow upstream of the shock, thus weakening it. On longitudinal cross sections, such as shown in Figure 5, the bump has a profile which forms in flow series an up-ramp 46 with a certain curvature distribution, a maximum M and a down-ramp 44 with a certain curvature distribution, with at least one of the up-ramp and the down-ramp forming an inflection point or curvature discontinuity point in the intake. Moreover, the inflection or curvature discontinuity point (or both points if there is one on the up-ramp and one on the down-ramp) is axially located between the highlight H and a position which is axially rearward therefrom by a distance of no more than 0.6 L (and preferably no more than 0.5 L or 0.4 L), where L is the axial distance between the highlight and the front fan face.

In the example of Figure 5, there is an inflection or curvature discontinuity point on the down-ramp at about point P. Additionally or alternatively, the bump 48 may have an inflection or curvature discontinuity point on the up-ramp, However, in this case, because the curvature of the intake 12 at the highlight H and at the maximum M of the bump generally have the same sign, the bump typically requires two such points sequentially on the up-ramp. Moreover, particularly if the bump only has inflection or curvature discontinuity point(s) on the up-ramp, the intake may have a further inflection point or curvature discontinuity point in the diffuser 42 relatively close to the fan face (i.e. outside the specified the 0.6 L distance from the highlight H). However, this further point relates to diffuser functionality and is not generally relevant for shock control.

The bump 48 is configured such that the radial inwards displacement of the intake 12 produced by the bump is a maximum at about the centre of the lower half (i.e. at bottom dead centre) and decays in magnitude in the circumferential direction (i.e. angular direction θ) to zero at about the 3 o'clock and 9 o'clock positions. This matches shock strength/separation, which is typically maximum at or close to bottom dead centre to coincide with maximum acceleration due to local peak incidence angle α.

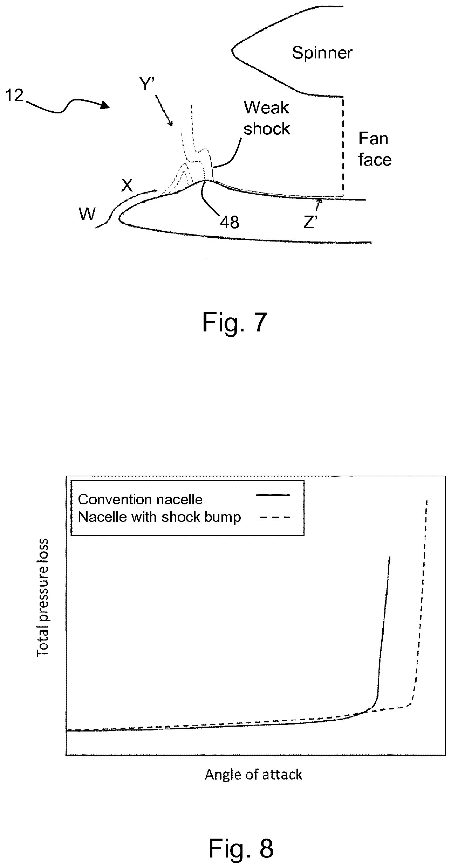

Referring to Figure 7, which is for comparison with Figure 1, the bump 48 weakens the shock shown in Figure 1, and turns it into a series of isentropic compression waves Y', usually terminated by a much weaker shock. These compression waves (and weaker shock) no longer cause separation, such that the boundary layer Z' stays attached. This results in reduced pressure loss, decreases the blockage caused to the fan, increases engine performance and allows the engine to operate without separation occurring at higher incidences than would otherwise be possible.

Thus, as shown in Figure 8, the operating range of engine intakes (i.e. the maximum angle of incidence before catastrophic separation and pressure loss occurs) can be increased through the use of shock control bumps. Alternatively, the use of shock control bumps can allow intake geometries to be made thinner and lighter, whilst maintaining the operating range.

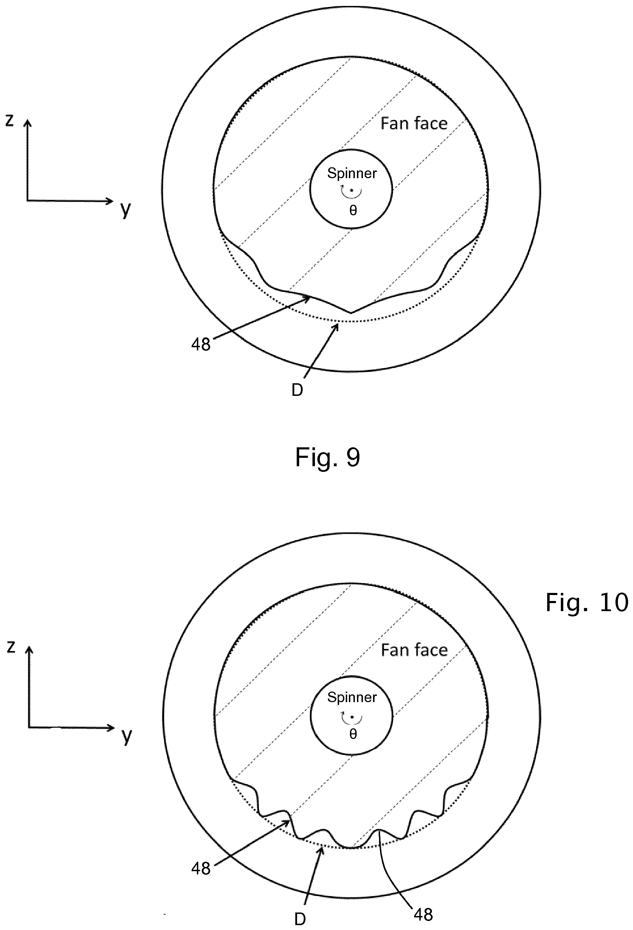

In Figures 5 and 6, the height of the shock control bump 48 varies smoothly from a maximum at bottom dead centre to zero at 3 o'clock and 9 o'clock positions. However, any one or more of the bump height, position, shape and width (axial extent) can vary arbitrarily with circumferential position (i.e. with θ), as shown in Figure 9. This allows the bump to be optimised a for a specific nacelle geometry and/or flow condition.

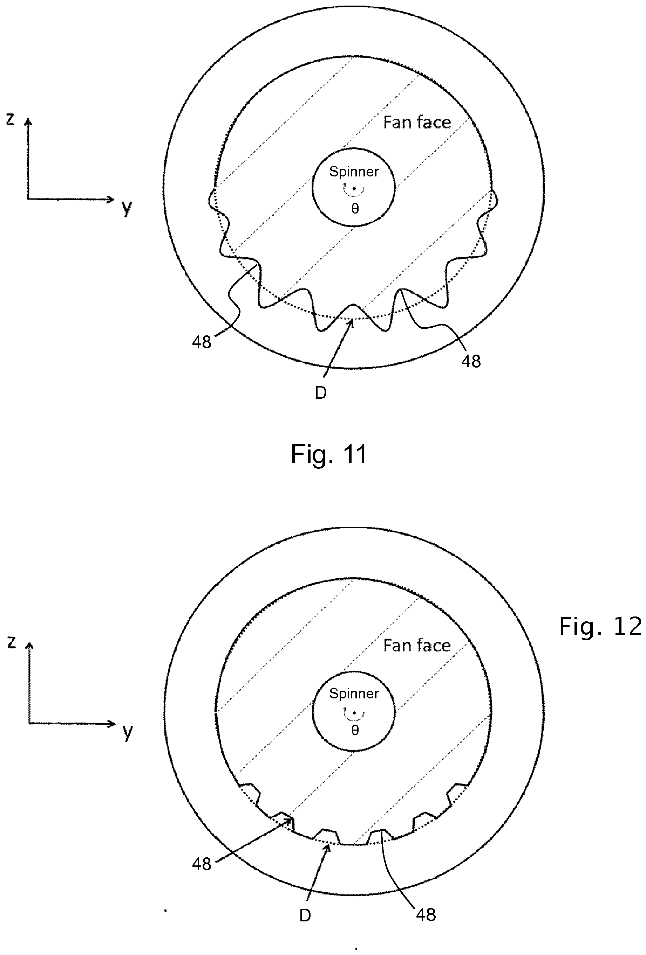

Indeed, instead of a single bump, a series of circumferentially spaced shock control bumps 48 can be used, as shown in Figure 10. In this example, the intake returns to a datum geometry between the bumps. This blocks less of the fan frontal area, than a single continuous bump, and can thereby increase mass flow through the fan while still weakening the shock. In the further example of Figure 11, this concept is extended such that the intake displaces radially outwards of the datum geometry between the bumps. In this way the intake flow area can be made at least the same as a conventional intake without shock control bumps.

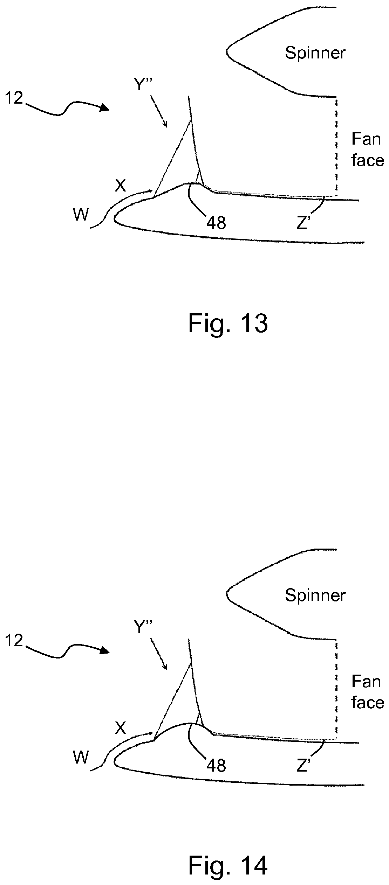

Yet another option is to use a facetted bump or a series of facetted bumps instead of the smoothly curved bump(s) discussed above in respect of Figures 5 to 11. Figure 12 shows schematically a front view of an intake with a series of circumferentially spaced facetted shock control bumps 48, and Figure 13 shows schematically, for comparison with Figures 1 and 7, a bottom half of a longitudinal cross section of the intake of Figure 12 at high angle of attack. Each facetted bump 48 has a straight-lined up-ramp and a straight-lined down-ramp with a flat therebetween, the up-ramp and down-ramp both being non-tangential to the upstream and downstream parts of the intake 12.

The vortical structures produced by facetted bumps 48 enhance boundary layer mixing to help keep flow attached, and the facetted bumps create a lambda type shock Y" that is weaker than the normal shock Y shown in Figure 1, thereby generating less loss and causing less separation. In general, however, due to entropy increase, the lambda shock Y" has a higher loss than the compression waves Y' of Figure 7. Facetted (or "ramp") bumps are discussed in Bruce, P. and Colliss, S., (2015), Review of research into shock control bumps, Shock Waves, 25(5):451-471.

Figure 14 shows a variant of the facetted bump of Figure 13. In this case, the bump 48 has a smoothly curved up-ramp and down-ramp. However, the ramps are both non-tangential to the upstream and downstream parts of the intake 12, and help to create a lambda type shock.

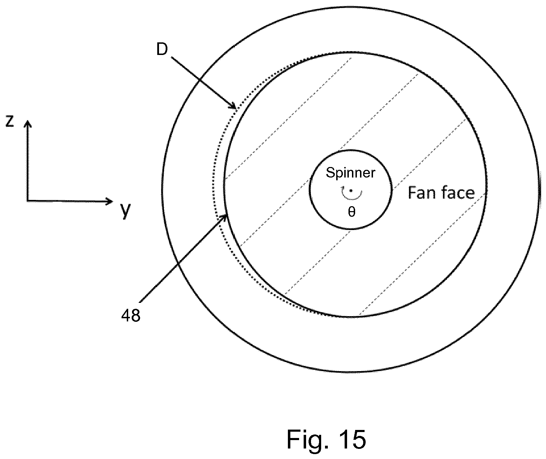

The shock control bump 48 or series of shock control bumps discussed above in respect of Figures 5 to 14 extend(s) over the lower half of the intake 12. However, the circumferential extent of the bump or series of bumps can be less than or greater than this, depending on the nacelle geometry and flow conditions. Additionally or alternatively, as shown in Figure 15, the midpoint of the bump 48 or series of bumps can be varied, and does not have to be bottom dead centre. For example, the bump or series of bumps can be to a side of the intake to reduce separation due to runway cross-winds.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A nacelle (21) defining an intake (12) for channelling and conditioning freestream airflow to a fan (23) of a ducted fan gas turbine engine (10), the intake comprising in flow series an intake lip (40), and a diffuser (42), the intake lip having at its forwardmost end a highlight (H) which is a closed loop defining a boundary between inner and outer surfaces of the nacelle, and the diffuser terminating at its rearwardmost end at a front face of the fan;
wherein the intake (12) has a circumferentially extending shock control bump (48) or a series of circumferentially spaced shock control bumps (48) formed thereon; and
wherein, on longitudinal cross sections through the intake containing the bump or series of bumps: the bump or each bump of the series of bumps has a profile which forms in flow series an up-ramp (46), a maximum (M) and a down-ramp (44), at least one of the up-ramp and the down-ramp forming an inflection point or curvature discontinuity point on the profile, and the inflection point or curvature discontinuity point being axially located between the highlight (H) and a position which is axially rearward therefrom by a distance of no more than 0.6 L, where L is the axial distance between the highlight and the front fan face.

2. The nacelle (21) according to claim 1, wherein the bump (48) or series of bumps (48) is a series of bumps, and the series of bumps is configured such that radial inwards displacement of the intake (12) by the series of bumps varies, in the circumferential direction, from a maximum at about the centre of the series of bumps to a minimum at the ends of the series of bumps.

3. The nacelle (21) according to claim 1 or 2, wherein the bump (48) or series of bumps (48) is centred, in the circumferential direction, on the bottom dead centre position of the intake (12).

4. The nacelle (21) according to any one of the previous claims, wherein on a closed loop around the intake coinciding with the bump or series of bumps, a first portion of the loop is without the bump or series of bumps, and a remaining second portion of the loop contains the bump or series of bumps

5. The nacelle (21) according to claim 4, wherein the first portion is one half of the circumferential extent of the closed loop, and the second portion is the other half of the circumferential extent of the closed loop.

6. The nacelle (21) according to any one of the previous claims, wherein the or each bump (48) is smoothly curved and is tangential to the surrounding parts of the intake (12).

7. The nacelle (21) according to any one of the previous claims, wherein the or each bump (48) is facetted.

8. The nacelle (21) according to any one of the previous claims, wherein the series of circumferentially spaced shock control bumps (48) is formed on the intake (12), the bumps being configured such that, between the bumps, the intake displaces radially outwards to compensate for fan frontal area blocked by the bumps.

9. A gas turbine engine (10) for an aircraft comprising:
an engine core (11) comprising a turbine (19), a compressor (14), and a core shaft (26) connecting the turbine to the compressor;
a fan (23) located upstream of the engine core, the fan comprising a plurality of fan blades; and
the nacelle (21) defining an intake (12) according to any one of the previous claims for channelling and conditioning freestream airflow to the fan (23).

10. The gas turbine engine (10) according to claim 9, further comprising a gearbox (30) that receives an input from the core shaft (26) and outputs drive to the fan (23) so as to drive the fan at a lower rotational speed than the core shaft.

11. The gas turbine engine according to 10, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine (17), second compressor (15), and second core shaft (27) are arranged to rotate at a higher rotational speed than the first core shaft (26).
